# EUROPÄISCHE PATENTANMELDUNG

(11) **EP 2 910 742 A1**
(43) Veröffentlichungstag der Anmeldung: **26.08.2015**
(21) Anmeldenummer: 14155892.4
(22) Anmeldetag: 20.02.2014
(51) Int. Cl.: F01K 23/10, F01D 13/00, F01D 15/10, F01D 19/00, F01K 23/16, F16D 1/00, F02C 6/18, F16D 48/00

(54) **Verfahren zum Kuppeln einer Dampfturbine und einer Gasturbine mit einem gewünschten Differenzwinkel**

(71) Anmelder: Siemens Aktiengesellschaft, 80333 München (DE)
(72) Erfinder: Bennauer, Martin, 46242 Bottrop (DE); Dänner, Mirko, 42549 Velbert (DE); Müller, Patrick, 91052 Erlangen (DE); Pieper, Daniel, 45529 Hattingen (DE); Zimmer, Gerta, 45468 Mülheim an der Ruhr (DE)

(57) **Zusammenfassung**

Die Erfindung betrifft ein Verfahren zum Kuppeln einer Dreheinrichtung, insbesondere einer Dampfturbine, und einer Welleneinrichtung, insbesondere einer Gasturbine, mit folgenden Schritten:
1) Beschleunigung der Dreheinrichtung bis zu einer Ausgangsdrehzahl, die unterhalb der Drehzahl der Welleneinrichtung liegt;
2) Erfassen eines Differenzwinkels zwischen Welleneinrichtung und Dreheinrichtung;
3) Beschleunigung der Dreheinrichtung mit einem Beschleunigungswert, der aus der Solldrehzahldifferenz abgeleitet wird, die in Abhängigkeit von dem erfassten Differenzwinkel, der Beschleunigung und von einem gewünschten Zielkuppelwinkel gebildet wird.

Die Erfindung betrifft ferner eine zugehörige Anordnung.

## Beschreibung

Die Erfindung betrifft ein Verfahren zum Kuppeln einer Dreheinrichtung, insbesondere eine Dampfturbine, und einer Welleneinrichtung, insbesondere einer Gasturbine.

In kombinierten Gas- und Dampfkraftwerken wird zunächst durch die Verbrennung von Gas die Gasturbine angetrieben. Mit der Abwärme der Gasturbine wird Dampf für eine Dampfturbine erzeugt. Beim Anfahren des Gas- und Dampfkraftwerks wird daher zuerst die Gasturbine betrieben. Die Dampfturbine kann erst zugeschaltet werden, wenn genügend Dampf bereitgestellt wird. Bei Einwellenanlagen sind Gasturbine und Generator fest auf einer Welle verbunden. Die Dampfturbine ist in der gleichen Achse angeordnet und kann über eine Kupplung angeschlossen werden. Es ist daher ein Kuppeln von Dampfturbine und Gasturbine erforderlich.

Der Kuppelwinkel ergab sich in der Praxis dabei zufällig. Aus der EP 1 911 939 A1 ist es bekannt, den Kuppelwinkel gezielt auszuwählen. Damit ist es möglich einen Kuppelwinkel zu wählen, bei dem die Schwingungsbelastung minimiert wird. Grob gesprochen ist es damit möglich, Unwuchten der beiden Turbinen in gewissem Umfang auszugleichen. Gerade im Vergleich zu einer Kupplung, bei der beide Turbinen so gekuppelt sind, dass sich Unwuchten addieren, kann damit eine Reduktion der Schwingungsbelastung erzielt werden. Trotz dieses Vorteils wird dieses Verfahren nicht eingesetzt.

Aufgabe der Erfindung ist es ein verbessertes Verfahren zum Kuppeln mit einem gewünschten Kuppelwinkel bereitzustellen. Ebenso soll eine entsprechende Anordnung entwickelt werden. Wenngleich sich die nachfolgend dargestellte Erfindung grundsätzlich zum Kuppeln von verschiedensten Dreheinrichtungen mit verschiedensten Welleneinrichtungen eignet, wird im Interesse einer anschaulichen Darstellung stets eine Dampfturbine als Beispiel für eine Dreheinrichtung und eine Gasturbine als Beispiel für eine Welleneinrichtung gewählt. Dabei handelt es sich um die aus derzeitiger Sicht wichtigste Anwendung der Erfindung. Weitere Anwendungen sind aber ausdrücklich denkbar.

Es wurde erkannt, dass ein Verfahren zum Kuppeln einer Dampfturbine und einer Gasturbine mit folgenden Schritten anzugeben ist. Zunächst ist die Dampfturbine bis zu einer Ausgangsdrehzahl, die unterhalb der Drehzahl der Gasturbine liegt, zu beschleunigen. Hierzu kann wie üblich vorgegangen werden und bei ausreichender Dampfmenge die Dampfturbine angefahren werden. Dabei gilt es einen Differenzwinkel zwischen Gasturbine und Dampfturbine zu erfassen. Bei Erreichen der Ausgangsdrehzahl wird die Beschleunigung der Dampfturbine mit einem Beschleunigungswert der in Abhängigkeit von Drehzahldifferenz und Differenzwinkel gewählt wird, fortgesetzt. Sobald die Drehzahldifferenz zwischen Dampfturbine und Gasturbine auf den Wert Null abgefallen ist, wird die Dampfturbine eingekuppelt, wobei die Dampfturbine gleichzeitig weiter beschleunigt wird. Bei Beginn des Einkuppelvorgangs ist die Drehzahl der Dampfturbine also gleich der Drehzahl der Gasturbine. Die Dampfturbine wird gegenüber der Gasturbine beschleunigt, so dass die Dampfturbinenendrehzahl kurzzeitig über die Drehzahl der Gasturbine ansteigt.

In Abhängigkeit von einem vorgegebenen Zielwinkel und der Dampfturbinenbeschleunigung bis zur Ausgangsdrehzahl wird der tatsächlich zu wählende Dampfturbinendrehzahlsollwert in Abhängigkeit von Winkeldifferenz und Drehzahldifferenz gesetzt. Es wird dabei die Erkenntnis genutzt, dass es einen eindeutigen Zusammenhang zwischen dem Differenzwinkel bei der Ausgangsdrehzahl, dem Beschleunigungswert, mit dem die Dampfturbine von der Ausgangsdrehzahl zu einer Solldrehzahl relativ zur Gasturbine beschleunigt wird und dem sich ergebenden Kuppelwinkel, vorliegend dem Zielkuppelwinkel gibt. Die Differenz zwischen der Solldrehzahl und der Drehzahl der Gasturbine wird als Solldrehzahldifferenz bezeichnet. Die Solldrehzahl der Dampfturbine ist zeitvariabel und wird in Abhängigkeit von Drehzahldifferenz und Winkeldifferenz gebildet. Während des Einkuppelns steigt die Drehzahl der Dampfturbinendrehzahl geringfügig über die Drehzahl der Gasturbine an. Nach Beendigung des Einkuppelns sind die Drehzahlen von Gasturbine und Dampfturbine naturgemäß gleich.

Erfindungsgemäß wird die Drehzahl der Dreheinrichtung mit einem Drehzahl-Sollwert geändert, der aus einer vorgegebenen Abhängigkeit zwischen des Differenzwinkels und einer Soll-Drehzahldifferenz abgeleitet wird, wobei bei der Ermittlung des Drehzahl-Sollwerts zusätzlich die ermittelte Drehzahl-Differenz berücksichtigt wird.

Der Differenzwinkel bei der Ausgangsdrehzahl, kurz Start-Differenzwinkel, ergibt sich zufällig und ist aus der Differenzwinkelmessung bekannt. Rechnerisch wird dabei der Start-Differenzwinkel aus einem 360°umfassenden Bereich um einen sogenannten nominalen Start-Differenzwinkel gewählt. Bei dem nominalen Start-Differenzwinkel handelt es sich um den Winkel, den die Gasturbine bei unveränderter Beibehaltung der Dampfturbinenbeschleunigung unter Berücksichtigung des Zielwinkels bis zum Einkuppeln der Dampfturbine vorauseilen würde. Dies soll an einem Beispiel dargestellt werden: Die Start-Differenzgeschwindigkeit sei - 1Hz, die bisherige Dampfturbinenbeschleunigung sei 0,05 Hz/s, der Zielwert 0°, dann ist der nominale Start-Differenzwinkel 3600°.

Der Zielkuppelwinkel wird normalerweise so gewählt, dass eine Minimierung einer Schwingungsbelastung der gekuppelten Gasturbine und Dampfturbine erreicht wird. Der bevorzugt anzusteuernde Zielkuppelwinkel kann dabei durch Messungen der Schwingungsbelastung und durch rechnerische Betrachtungen ermittelt werden. Im Regelfall wird eine Kombination aus beidem zum Tragen kommen.

Bei der Wahl der Ausgangs-Drehzahldifferenz und der Wahl des Beschleunigungswerts bestehen, wenn auch eingeschränkte, Freiheitsgrade. Bei der Wahl des Beschleunigungswerts ist zu berücksichtigen, dass genügend Dampf zur Verfügung steht und keine Instabilitäten oder dergleichen auftreten.

Als günstig hat sich erwiesen, wenn die Ausgangs-Drehzahldifferenz etwa 0,5 Hz bis etwa 1 Hz beträgt, wobei die Drehzahl der Dampfturbine kleiner ist als die Drehzahl der Gasturbine.

Ein wesentlicher Vorteil des vorliegenden Verfahrens gegenüber dem in der EP 1 911 939 A1 angewandten Verfahren ist, dass keine Unterbrechung des Beschleunigungsvorgangs bei einer Haltedrehzahl erforderlich ist. Damit kann zügig eingekuppelt werden und zugleich ein gewünschter Zielkuppelwinkel erreicht werden.

Zu beachten ist auch, dass während der Beschleunigung der Dampfturbine von der Ausgangsdrehzahl bis zu der Drehzahl, bei der die Geschwindigkeit der Dampfturbine die der Gasturbine erreicht hat, die Gasturbine der Dampfturbine um mehrere volle Umdrehungen in Bezug auf den Zielwinkel vorauseilt. Hinsichtlich der Änderung des Differenzwinkels ist die Zahl der vollen Umdrehungen, welche die Gasturbine vorauseilt, ersichtlich irrelevant. Eine Veränderung der Anzahl dieser vollen Umdrehungen gibt einen weiteren Freiheitsgrad, so dass zum Erreichen des gewünschten Zielkuppelwinkels bei gegebener Beschleunigung verschiedene Ausgangs-Drehzahldifferenzen möglich sind, beziehungsweise bei gegebener Ausgangs-Drehzahl-differenz verschiedene Beschleunigungswerte in Frage kommen.

In einer Ausführungsform wird die gewünschte Ausgangs-Drehzahldifferenz aus einem Drehzahldifferenzbereich gewählt, so dass bei der Festsetzung des gewünschten Beschleunigungswerts aus der Solldrehzahldifferenz der Wert gewählt wird, mit dem die Beschleunigung der Dampfturbine zur Ausgangsdrehzahl erfolgt ist. Damit kann erreicht werden, dass der Beschleunigungswert zum Erreichen des Zielwinkels möglichst wenig oder gar im Idealfall nicht verändert werden muss.

In einer Ausführungsform ist vorgesehen, dass die Ausgangsdrehzahl etwa 1 Hz unterhalb der Drehzahl der Gasturbine liegt, etwa 0,5 Hz bis etwa 1,5 Hz oder etwa 0,5 Hz bis etwa 1,1 Hz. Diese Werte haben sich als geeignet erwiesen.

In einer weiteren Ausführungsform ist vorgesehen, dass der Beschleunigungswert etwa 0,025 Hz/s bis etwa 0,075 Hz/s, bevorzugt etwa 0,05 Hz/s beträgt.

Es ist im Normalfall zu beachten, dass beim Einkuppeln der Differenzwinkel um einen Kupplungsverdrehwinkel verändert wird. Dies liegt daran, dass die Dampfturbine zunächst im Regelfall auf die Solldrehzahl, also eine Drehzahl leicht oberhalb der Drehzahl der Gasturbine, beschleunigt wird. Durch das diesem Überholvorgang folgende Eindrehen in eine Kupplungshülse kann ein Rückdrehen um den Kupplungsverdrehwinkel erfolgen. Durch Berücksichtigung des Kupplungsverdrehwinkels kann letztlich die Schwingungsbelastung weiter optimiert werden.

Die Erfindung betrifft auch eine entsprechende Anordnung mit einer Gasturbine und einer Dampfturbine, mit einer Kupplung zum Kuppeln von Gasturbine und Dampfturbine. Diese Anordnung weist eine Einrichtung zum Erfassen des Differenzwinkels zwischen Gasturbine und Dampfturbine auf. Ferner ist eine Einrichtung zum Beschleunigen der Dampfturbine mit einem Beschleunigungswert vorhanden. Darüber hinaus sind Mittel angeordnet, die ermöglichen in Abhängigkeit des erfassten Differenzwinkels durch Bestimmung eines Beschleunigungswerts, mit dem die Dampfturbine beschleunigt wird, und einer Solldrehzahldifferenz zwischen Gasturbine und Dampfturbine, bei der ein Einkuppelvorgang beginnt, einen gewünschten Zielkuppelwinkel zwischen Gasturbine und Dampfturbine zu erreichen. Diese Anordnung eignet sich zum Ausführen des oben geschilderten Verfahrens. Durch Ausgestaltungen der Anordnung können die verschiedenen Ausführungsformen des Verfahrens verwirklicht werden.

Es ist dabei darzustellen, dass es allenfalls geringfügiger konstruktiver Änderungen einer bekannten Gasturbinenanlage, die einen Abhitzedampferzeuger, der Dampf zum Antreiben einer Dampfturbine bereitstellt, bedarf. So sind stets Mittel zum Beschleunigen der Dampfturbine vorhanden. Konkret handelt es sich dabei unter anderem um Ventile, welche den Dampf zur Dampfturbine führen sollen, sowie die zugehörige Ansteuerung der Ventile. Es ist auch üblich die Phasenlage von Turbinen zu bestimmen. Entsprechende Messeinrichtungen sind daher normalerweise vorhanden. Allerdings wird die Phasenlage bei bekannten Anlagen häufig nicht schnell genug erfasst. So wird eine Nachrüstung erforderlich sein, um den Relativwinkel schnell genug zu erfassen und den erfassten Wert für die Steuerung zu stellen. Dazu ist eine Taktung von etwa 4 ms bis etwa 20 ms normalerweise sinnvoll. In der Regel sind darüber hinaus nur die Steuereinrichtungen im Vergleich zum Stand der Technik zu modifizieren.

Die Erfindung wird nachfolgend anhand von Figuren näher beschrieben. Dabei zeigen:
- Figur 1: den Zusammenhang verschiedener Kuppelwinkel bei verschiedenen Relativbeschleunigungen ausgehend von Ausgangs-Drehzahldifferenz 1 Hz und Ausgangswinkeldifferenz Null;
- Figur 2: die Solldrehzahldifferenz in Abhängigkeit vom Differenzwinkel ausgehend von Ausgangs-Drehzahldifferenz 1 Hz und Ausgangswinkeldifferenz -3600°;
- Figur 3: beispielhaft den Verlauf der Drehzahl der Gasturbine und der Dampfturbine;
- Figur 4: den Verlauf des Differenzwinkels beim Einkuppeln und den Kupplungsverdrehwinkel;
- Figur 5: schematische Darstellung eines Wellenstranges;
- Figur 6: Prinzip des Einkuppelns mit gewünschtem Differenzwinkel.

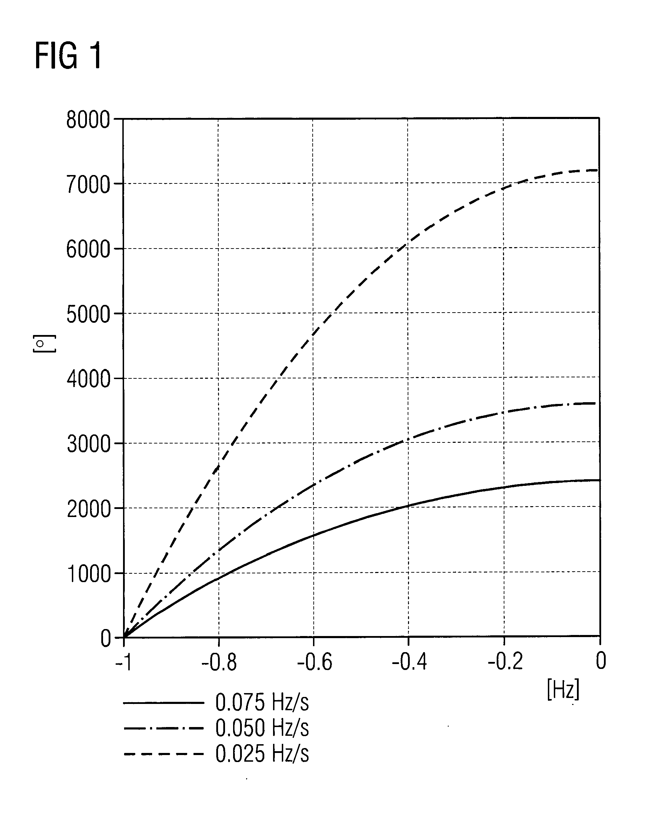

In Figur 1 ist für verschiedene konstante Beschleunigungswerte der Differenzwinkel während des Beschleunigens der Dampfturbine in Abhängigkeit der jeweiligen Drehzahldifferenz aufgezeigt. Auf der Rechtswertachse ist die Drehzahldifferenz von Gasturbine zu Dampfturbine in Hz aufgetragen. Auf der Hochwertachse der Differenzwinkel in Grad, wobei auch die ganzzahligen Vielfache von 360° addiert sind.

Die oberste gestrichelte Kurve zeigt die Zusammenhänge bei einem Beschleunigungswert von 0,025 Hz/s, die mittlere gepunktete Kurve bei einem Beschleunigungswert von 0,05 Hz/s und die untere durchgezogene Linie bei einem Beschleunigungswert von 0,075 Hz/s. Dies soll anhand der mittleren Kurve näher erläutert werden.

Als Ausgangspunkt wird der Punkt am linken, unteren Ende der Kurve betrachtet. Die winkeldifferenz zwischen Gas- und Dampfturbine beträgt Null, die Drehzahldifferenz -1 Hz. D.h. die Gasturbine dreht mit einem Hz mehr als die Dampfturbine. An diesem Punkt, also bei dieser Ausgangsdrehzahldifferenz der Dampfturbine, soll das gezielte Anfahren eines Kuppelwinkels beginnen.

Die Dampfturbine wird mit einer gleichbleibenden Beschleunigung von 0,05 Hz/s relativ zur Gasturbine beschleunig bis beide Turbinen die gleiche Drehzahl haben. Die bis dahin schnellere Gasturbine überstreicht bis zu dem Zeitpunkt, an dem die Dampfturbine die gleiche Geschwindigkeit hat, einen um 3600° größeren Winkel als die Dampfturbine, sie hat also in dem Zeitraum 10 Umdrehungen mehr erfahren als die Dampfturbine. Es sei hingewiesen, dass die Zeitachse hier nicht dargestellt ist. Wie an der Kurve zu erkennen ist, nimmt die Differenzwinkeländerung zwischen Gas- und Dampfturbine ab, je mehr sich die Geschwindigkeiten annähern, d.h. je geringer die Drehzahldifferenz ist. Wie weiter aus den unterschiedlichen Kurven ersichtlich ist, ist der überfahrene Winkel bis zum Einkuppelbeginn umso größer, je kleiner die Beschleunigung ist. Dieser Effekt wird wesentlich zur Ansteuerung eines gewählten Zielkuppelwinkels herangezogen.

Bei anderen Beschleunigungswerten und anderen Start-Differenzwinkeln gelten quantitativ andere Zusammenhänge, die Überlegungen sind aber ansonsten analog. Beispielsweise würde bei einem Start-Differenzwinkel von -3600° und einer relativen Beschleunigung von 0,05 Hz der Zielkuppelwinkel für den Beginn des Einkuppelns 0° betragen.

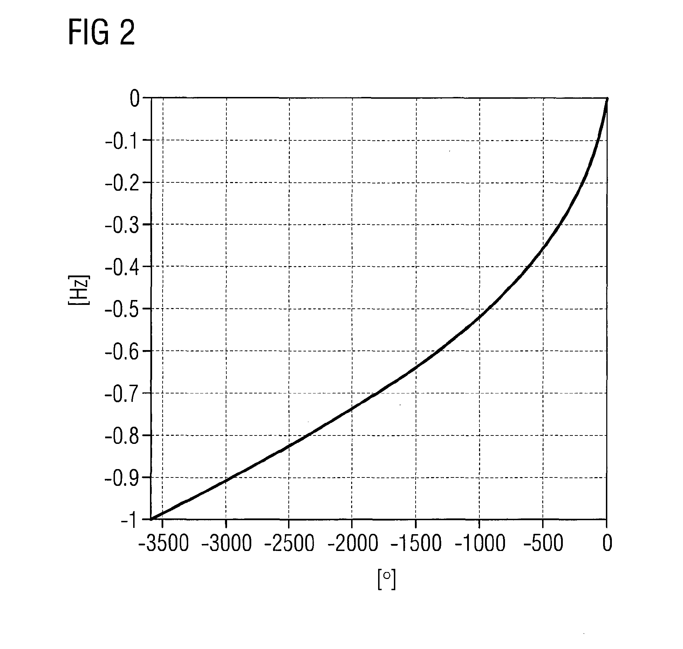

Figur 2 ist eine inverse Darstellung von Figur 1, wobei nur die Kurve mit einem Beschleunigungswert von 0,05 Hz/s dargestellt ist. Der Start-Differenzwinkel ist hier im Vergleich zu Figur 1 zu -3600° gesetzt um nominal einen Ziel-Kuppelwinkel von 0° zu erreichen. Auf der Rechtswertachse ist der Differenzwinkel in Grad, wobei auch die ganzzahligen Vielfache von 360° addiert sind aufgetragen. Auf der Hochwertachse ist die Drehzahldifferenz von Gasturbine zu Dampfturbine in Hz aufgetragen.

Figur 2 zeigt somit auf, wie bei konstanter Relativbeschleunigung von 0,05 Hz/s die Drehzahldifferenz vom Differenzwinkel abhängt. Dabei wird bei übereinstimmender Frequenz von Gasturbine und Dampfturbine ein Differenzwinkel von 0° angenommen. Für eine gewählte Beschleunigung von 0.05 Hz/s stellt Figur 2 die zentrale Sollwertkurve dar. So sollte z.B. die Geschwindigkeitsdifferenz zwischen Gas- und Dampfturbine bei einer Winkeldifferenz von 900° -0.5 Hz betragen. Das heißt, dass bei der Winkeldifferenz von 900° die Dampfturbine noch um 0,5 Hz langsamer ist als die Gasturbine.

Im Idealfall beschreibt Figur 2 den Zusammenhang zwischen überstrichenem Winkel und Drehzahldifferenz zwischen Dampf- und Gasturbine.

Ist bei der realen Anlage bei einem gemessenen Differenzwinkel von -900° die Geschwindigkeitsdifferenz größer, wird bei gleichbleibender Beschleunigung von 0,05 Hz/s nicht der Zielwinkel 0° erreicht, sondern ein größerer Zielwinkel. In diesem Fall ist die Dampfturbine zu langsam; sie muss stärker beschleunigt werden.

Ist umgekehrt bei der realen Anlage bei einem gemessenen Differenzwinkel von -900° die Geschwindigkeitsdifferenz kleiner, wird bei gleichbleibender Beschleunigung von 0.05 Hz/s nicht der Zielwinkel 0° erreicht, sondern ein kleinerer Zielwinkel. In diesem Fall ist die Dampfturbine zu schnell, sie muss abgebremst werden.

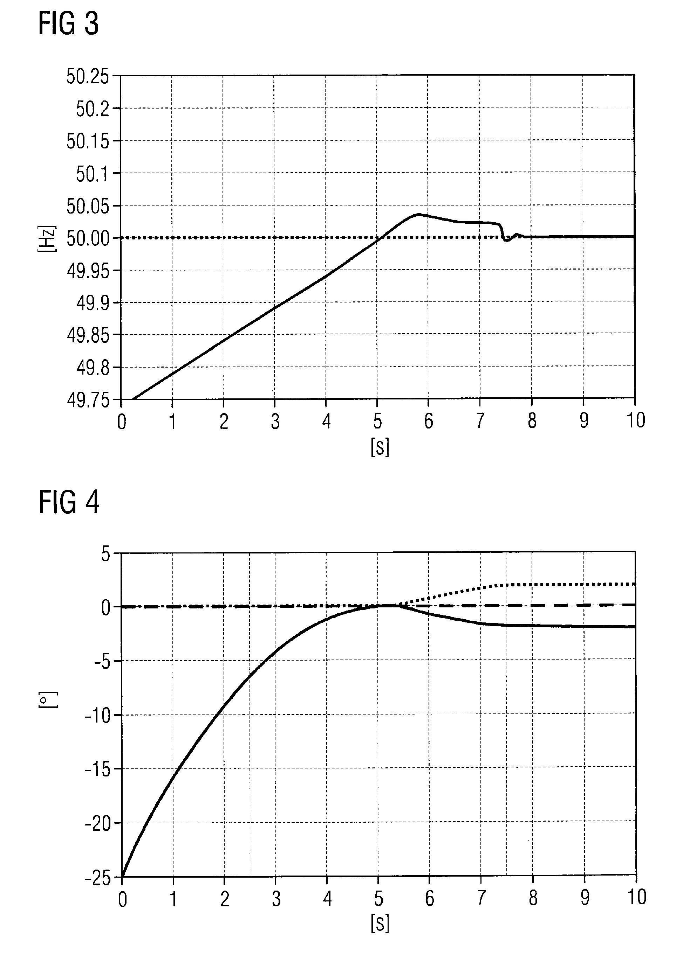

Der Einkuppelvorgang als solcher ist in Figur 3 dargestellt. Auf der Rechtswertachse ist die Zeit in Sekunden und auf der Hochwertachse die Drehzahl aufgetragen. Die Dampfturbine ist zunächst langsamer als die Gasturbine, wird aber relativ zu dieser beschleunigt. Die Drehzahl der Gasturbine liegt konstant bei 50 Hz, wie durch die gepunktete Linie dargestellt. Die Geschwindigkeit der Dampfturbine wird mit der durchgezogenen Linie abgebildet. Zu dem Zeitpunkt, an dem die Dampfturbine die gleiche Geschwindigkeit hat wie die Gasturbine, beginnt der Einkuppelvorgang. Es wird also begonnen die Kupplung einzurücken. Die Dampfturbine wird zunächst weiter beschleunigt, überholt dabei die Gasturbine und läuft in den Anschlag der Kupplung. An dieser Position erfolgt ein Abbremsen. Danach rotieren beide Turbinenwellen mit der gleichen Drehzahl.

Die Auswirkungen des Einkuppelns auf den Differenzwinkel werden aus Figur 4 ersichtlich. Auf der Rechtswertachse ist wiederum die Zeit in Sekunden und auf der Hochwertachse die Drehwinkeldifferenz in Grad aufgetragen. Die gestrichelte Linie zeigt einen Sollwert der Winkeldifferenz auf, der hier bei 0° liegt. Die durchgezogene, zunächst unten verlaufende Linie zeigt den zeitlichen Verlauf der tatsächlichen Winkeldifferenz auf. Zunächst ist der Drehwinkel der Dampfturbine 250° kleiner als der Drehwinkel der Gasturbine. Diese Drehwinkeldifferenz nimmt zunächst bis auf eine Differenz von Null Grad rasch ab. Danach nimmt die Drehwinkeldifferenz wieder zu, vorliegend um etwa 20°. Dies liegt daran, dass beim Eindrehen in die Kupplungshülse ein Rückdrehen der Dampfturbine um den Kupplungsverdrehwinkel erfolgt. Der Verlauf des Kupplungsverdrehwinkels ist an der gepunkteten Linie zu erkennen.

Es gilt also bei der Wahl des gewünschten Zielkuppelwinkels beim Kuppeln zu berücksichtigen, dass beim Einkuppeln eine Änderung der Drehwinkeldifferenz um den Kupplungsverdrehwinkel erfolgt.

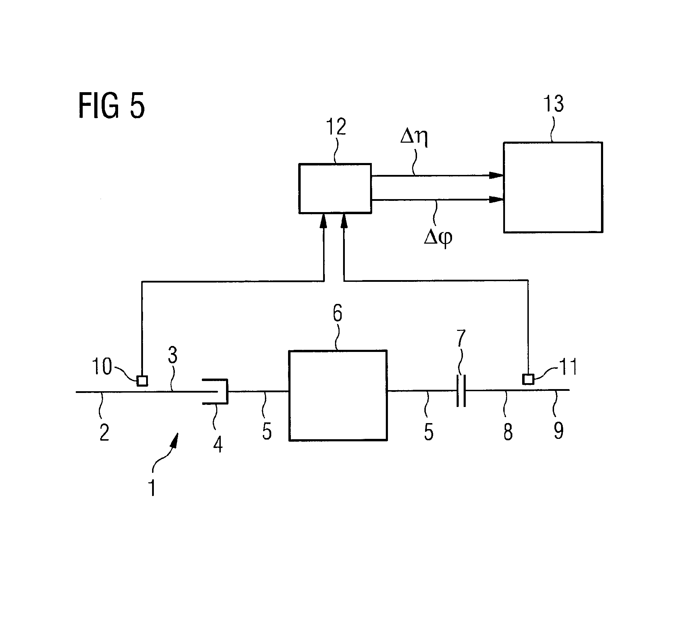

Figur 5 zeigt eine schematische Darstellung eines Wellenstranges 1. Dieser umfasst eine Dreheinrichtung 2, die die Welle 3 einer nicht dargestellten Dampfturbine bildet. Die Welle 3 ist mit einer Kupplung 4 mit einer Generatorwelle 5 koppelbar. Die Generatorwelle 5 wird durch den Generator 6 angetrieben. Über eine weitere Kupplung 7 wird die Generatorwelle 5 mit einer Welleneinrichtung 8, die die Welle 9 einer nicht näher dargestellten Gasturbine bildet, verbunden.

Über einen Keyphaser 10 wird die Drehzahl und der Drehwinkel der Welle 3 ermittelt. Über einen weiteren Keyphaser 11 wird die Drehzahl und der Drehwinkel der Welle 9 ermittelt. Die Signale aus dem Keyphaser 10 und dem Keyphaser 11 werden zu einer Einheit 12 übertragen. Aus der Einheit 12 wird der Differenzwinkel Δ ϕ und die Drehzahldifferenz Δn an einen Turbinenregler 13 weitergeleitet.

Bis zu einer vorgegebenen Geschwindigkeitsdifferenz wird die Dampfturbine wie gewohnt über eine vorgegebene Rampe beschleunigt. Bei einem Geschwindigkeitsunterschied von 1Hz, also der Ausgangsdrehzahl, erfolgt eine Umschaltung auf das zielwinkelgeregelte Einkuppeln. Dazu wird die aktuelle Winkeldifferenz im Bereich 0°-360° erfasst und um den Winkelbereich reduziert, den die Gasturbine bei Beibehalten der bisherigen Beschleunigung der Dampfturbine bis zum Beginn des Einkuppelns überstreichen würde. Dies soll an einem Beispiel verdeutlicht werden: Die Drehzahldifferenz zwischen Gas- und Dampfturbine betrage 1 Hz, die Dampfturbine werde mit 0,05 Hz/s beschleunigt. Bis zu dem Zeitpunkt, an dem Gas- und Dampfturbine die gleiche Geschwindigkeit haben, vergehen 20 s. Der dabei überfahrene Differenzwinkel beträgt 3600°.

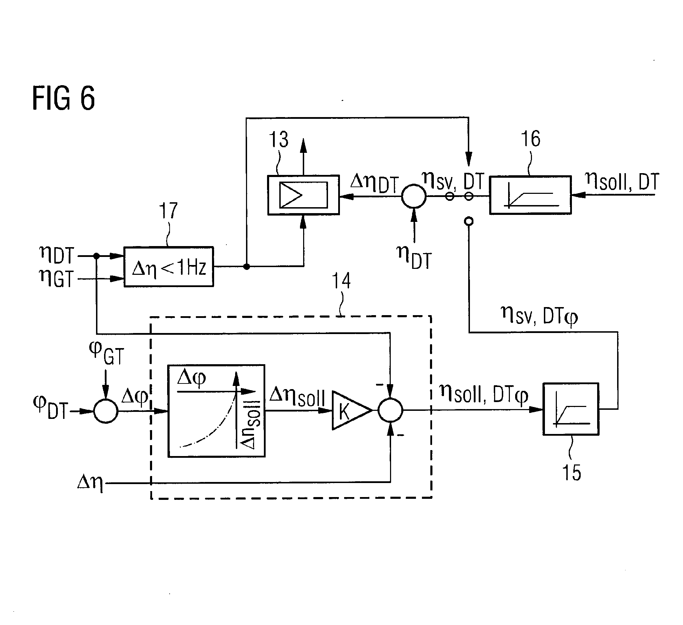

Figur 6 beschreibt die eigentliche Regelung des Zielkuppelwinkels. Die Differenz zwischen Dampfturbinenverdrehwinkel und Gasturbinenverdrehwinkel, also der Differenzwinkel, wird mittels einer Kennlinie in eine Soll-Drehzahldifferenz zwischen Dampf- und Gasturbine überführt. Die Solldrehzahl der Dampfturbine wird also in Abhängigkeit der Gasturbinendrehzahl und des Differenzwinkels festgelegt. Der Faktor ,K' gibt dabei die zusätzliche Möglichkeit diese Soll-Drehzahldifferenz weiter zu verstärken. Der Faktor ,K' ist dabei der Rückführfaktor der Regeldifferenz, also der Abweichung des Istwerts vom Sollwert. Es ist somit ein P-Regler. Er ist in Hinblick auf die Eigenschaften des resultierenden Gesamtregelkreises separat zu analysieren und fest zu legen. Standardvorgabe ist K = 1. Durch Addition der Gasturbinendrehzahl ergibt sich die Solldrehzahl der Dampfturbine.

Die Verwendung eines ,adjustable Off-Set' ermöglicht es, die gesamte rechnerische Vorgabe auf den Zielwinkel Null auszulegen. Ein von Null abweichender Wunsch-Zielwinkel wird über dieses Off-Set so verschoben, dass eine Standardkurve für den Zusammenhang Δϕ zu Δnₛₒₗₗ verwendbar ist. Mit diesem Ansatz ist es dann möglich, die Überlegungen auf den Wunsch-Zielwinkel von 0° zu beschränken.

Zusätzlich zum Differenzwinkel Δϕ wird die Differenzdrehzahl Δn in einer Einheit 14 verarbeitet. Außerdem wird die Drehzahl n_{DT} in der Einheit 14 verarbeitet. In der Einheit 14 wird eine Solldrehzahl n_{soll,DT}ϕ generiert, die zu einer Sollwertführung 15 geführt wird. In der Sollwertführung wird das Signal n_{SV,DT}ϕ erzeugt und einer weiteren Sollwertführung 16 zugeführt. Am Ausgang der Sollwertführung 16 wird ein Wert für die Drehzahländerung Δn_{DT} erzeugt und an den Turbinenregler 13 weitergeleitet wird. Außerdem wird zum Turbinenregler 13 das Signal aus einem Schaltkriterium 17 zugeschaltet. Das Signal aus dem Schaltkriterium wird dann verwendet um zwischen der Sollwertführung 15 und der Sollwertführung 16 umzuschalten.

Bei Beschleunigung der Dampfturbine relativ zur Gasturbine mit konstanter Beschleunigung k Hz/s wird zur Überwindung einer Ausgangsdrehzahldifferenz von Δω₀ eine Zeit t = Δω₀/k benötigt. In dieser Zeit überfährt das System eine relative Winkeldifferenz, die (Δω₀)²/(2*k) ganzen Umdrehungen entspricht. Entspräche der Differenzwinkel bei Start-Drehzahl-differenz Δω₀ also zufällig -360°*(Δω₀)²/(2*k), wäre die konstante Beschleunigung k geeignet, um den Zielwinkel 0° an zu steuern. Bei jeder anderen Start-Winkeldifferenz muss die Beschleunigung verändert werden, um den Zielwinkel 0° zu erreichen. Wird nun der Start-Winkel zu -360°*(Δω₀)²/(2*k) + gemessener Winkel gesetzt, bedeutet das, dass die Turbine relativ zur Beschleunigung k bis zur Ausgangsdrehzahl eine etwas vergrößerte Beschleunigung erfahren muss. Leichte Erhöhung der Beschleunigung während des geregelten Anfahrens des ZielKuppelwinkels hat sich als vorteilhafter erwiesen als leichte Reduktion der Beschleunigung. Der gewählte Ansatz, den Differenzwinkel bei Start-Drehzahldifferenz wie oben anzusetzen, ermöglicht immer die Beschleunigung leicht zu erhöhen. An einem Zahlenbeispiel: Es ist besser davon auszugehen, dass die Dampfturbine 270° vorauseilen muss, anstatt 90° zurückfallen soll.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Kuppeln einer Dreheinrichtung, insbesondere einer Dampfturbine,
und einer Welleneinrichtung,
insbesondere einer Gasturbine,
mit folgenden Schritten:
- Beschleunigung der Dreheinrichtung bis zu einer Ausgangsdrehzahl, die unterhalb der Drehzahl der Welleneinrichtung liegt;
- Erfassen eines Differenzwinkels (Δϕ)zwischen Welleneinrichtung und Dreheinrichtung; wobei eine Drehzahldifferenz (Δn), die aus der Differenz aus der Drehzahl der Dreheinrichtung (n_{DT}) und der Drehzahl der Welleneinrichtung (n_{GT}) gebildet wird, ermittelt wird;
- Ändern der Drehzahl der Dreheinrichtung (n_{DT}) mit einem Drehzahl-Sollwert (Δn_{DT}), der aus einer vorgegebenen Abhängigkeit zwischen des Differenzwinkels (Δϕ) und einer Soll-Drehzahldifferenz (Δnₛₒₗₗ) abgeleitet wird, wobei bei der Ermittlung des Drehzahl-Sollwerts (Δn_{DT}) zusätzlich die ermittelte Drehzahldifferenz (Δn) berücksichtigt wird.

2. Verfahren nach Anspruch 1,
wobei das Ändern der Drehzahl der Dreheinrichtung (n_{DT}) mit dem Drehzahl-Sollwert (Δn_{DT}) außerdem mittels einer SollDrehzahl (n_{soll,DT}) der Dreheinrichtung als Eingangsgröße zur Verfügung gestellt wird.

3. Verfahren nach einem der vorhergehenden Ansprüche,
wobei ein Turbinenregler vorgesehen ist, mit dem Drehzahl-Sollwert (Δn_{DT}) und einem Schaltkriterium als Eingangsgröße.

4. Verfahren nach einem der vorhergehenden Ansprüche,
**dadurch gekennzeichnet, dass**
die Ausgangsdrehzahl etwa 1 Hz unterhalb der Drehzahl der Welleneinrichtung liegt, im Wesentlichen etwa 0,5 Hz bis etwa 1,5 Hz, und etwa 0,9 Hz und etwa 1,1 Hz.

5. Verfahren nach einem der vorhergehenden Ansprüche,
**dadurch gekennzeichnet, dass**
der Beschleunigungswert etwa 0,025 Hz/s bis etwa 0,075 Hz/s, bevorzugt etwa 0,05 Hz/s, beträgt.

6. Anordnung mit einer Welleneinrichtung,
insbesondere einer Gasturbine,
und einer Dreheinrichtung,
insbesondere einer Dampfturbine,
mit einer Kupplung zum Kuppeln von Welleneinrichtung und Dreheinrichtung, aufweisend:
eine Einrichtung zum Erfassen des Differenzwinkels zwischen Welleneinrichtung und Dreheinrichtung;
eine Einrichtung zum Beschleunigen der Dreheinrichtung mit einem Beschleunigungswert;
Mittel, die ermöglichen in Abhängigkeit des erfassten Differenzwinkels (Δϕ) und der erfassten Drehzahl-Differenz (Δn) einen gewünschten Zielkupplungswinkel zwischen Welleneinrichtung und Dreheinrichtung zu erreichen.
